# EUROPEAN PATENT SPECIFICATION

(11) **EP 1 847 741 B1**
(45) Date of publication and mention of the grant of the patent: **07.07.2010**
(21) Application number: 07005285.7
(22) Date of filing: 14.03.2007
(51) Int. Cl.: F16K 15/20

(54) **Valve core**
Ventileinsatz
Noyau de vanne

(30) Priority: 20.04.2006 JP 2006117255
(43) Date of publication of application: 24.10.2007
(73) Proprietor: Pacific Industrial Co., Ltd., Ogaki-shi, Gifu-ken 503-8603 (JP)
(72) Inventor: Yamamoto, Masahiko, Gifu-ken, 503-8603 (JP)
(74) Representative: Kramer - Barske - Schmidtchen

(56) References cited:
- JP-A- 2004 068 954
- JP-A- 2004 239 245
- US-A1- 2003 116 199

## Description

This invention relates to a valve core which is mounted in a core mounting hole defined in a core retaining member to open and close the hole.

One of known valve cores of the above-described type includes a cylindrical core base having a through bore and a movable shaft extending through the bore. The movable shaft has a distal end on which a rubber sealing member is provided. The rubber sealing member is caused to adhere closely to a distal end of the core base thereby to close a core mounting hole. For example, JP-A-2004-68954 discloses a conventional valve core of the aforesaid type.

However, when the aforesaid valve core is used in an environment where the valve core is subjected to a high gas pressure, for example, a refrigerant passageway of an air conditioner, a slight amount of gas penetrates through the rubber sealing member, leaking outside while the valve core is closed. In view of this problem, a structure having both rubber sealing member and metal sealing portion is proposed. However, the gas pressure and spring force of a spring of the valve core are so small that metal members composing the metal sealing portion cannot be caused to bite into each other. As a result, there is a possibility that the metal sealing portion cannot function. Accordingly, an amount of gas leak cannot be reduced reliably.

Therefore, an object of the present invention is to provide a valve core which can reduce an amount of gas leak as compared with conventional valve cores.

The present invention provides a valve core which is mounted in a core mounting hole defined in a core retaining member to open and close the core mounting hole, the core mounting hole having an inner peripheral surface, the valve core comprising a cylindrical core base fixed in the core mounting hole and having a distal end, a movable shaft extending through the core base so as to be movable, the movable shaft having a distal end, a first sealing member made of rubber and provided on the distal end of the movable shaft so as to adhere closely to the distal end of the core base or the inner circumferential surface of the core mounting hole, thereby closing the core mounting hole, characterized by a second sealing member made of a metal glass and provided on the distal end of either one of the movable shaft and the core base so as to adhere closely to the distal end of the other, thereby closing the core mounting hole.

The above-described construction is provided with a double seal structure including the first or rubber sealing member and the second or metal glass sealing member. The metal glass constituting the metal glass sealing member has an exceedingly higher elasticity than ordinary metal materials. Accordingly, the metal glass sealing member can be caused to adhere closely to a counterpart (the distal end of the movable shaft or of the core base) to provide seal by application of a smaller force than in the case where a metal seal functions. Moreover, since the metal glass is amorphous like oxide glass, gas is difficult to permeate the metal glass. Consequently, the above-described valve core can reduce an amount of gas leak as compared with conventional valve cores having only the rubber seal or conventional valve cores provided with the combination of the rubber and metal seals.

In one embodiment, the second sealing member is made of a titanium alloy containing a Va group element including vanadium, niobium and tantalum and a IVa group element including zirconium and hafnium. In this composition, a relatively higher elastic deformation performance can be achieved as compared with another metal glass is employed and a degree of adhesion of the metal glass sealing member can be increased.

In another embodiment, the valve core further comprises a metal glass fixing portion formed on the movable shaft to which the second sealing member is fitted and a shaft end flange formed on the movable shaft so as to sandwich the first sealing member in cooperation with the second sealing member therebetween. Since the metal glass sealing member serves to retain the rubber sealing member, the number of components can be reduced.

In further another embodiment, the valve core further comprises locking protrusions which are formed on the shaft end flange and the second sealing member so as to bite into the first sealing member, thereby limiting deformation of the first sealing member. Consequently, the rubber sealing member can be prevented from being detached.

The invention will be described, merely by way of example, with reference to the accompanying drawings, in which:
FIG. 1 is a sectional side view of a valve core of one embodiment in accordance with the present invention;
FIG. 2 is a sectional side view of the valve core in an open state;
FIG. 3 is a sectional side view of the valve core in a closing process;
FIG. 4 is a sectional side view of the valve core in a closed state;
FIG. 5 is a sectional side view of a valve core of a second embodiment in accordance with the present invention;
FIG. 6 is a sectional side view of a valve core of a third embodiment in accordance with the present invention;
FIG. 7 is a sectional side view of a valve core of a fourth embodiment in accordance with the present invention;
FIG. 8 is a sectional side view of a valve core of a fifth embodiment in accordance with the present invention;
FIG. 9 is a sectional side view of a valve core of a sixth embodiment in accordance with the present invention; and
FIG. 10 is a sectional side view of a valve core of a seventh embodiment in accordance with the present invention.

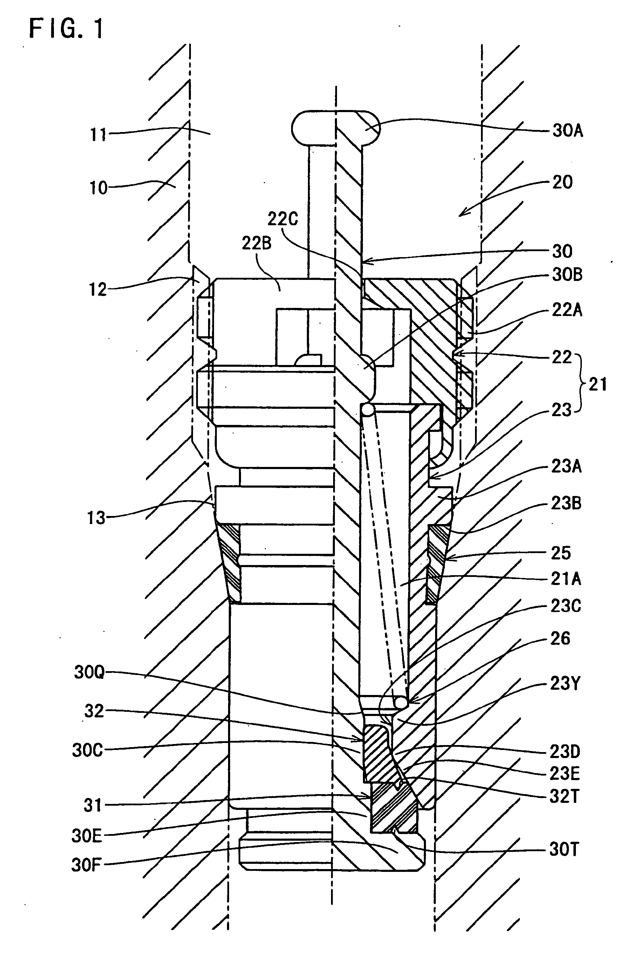

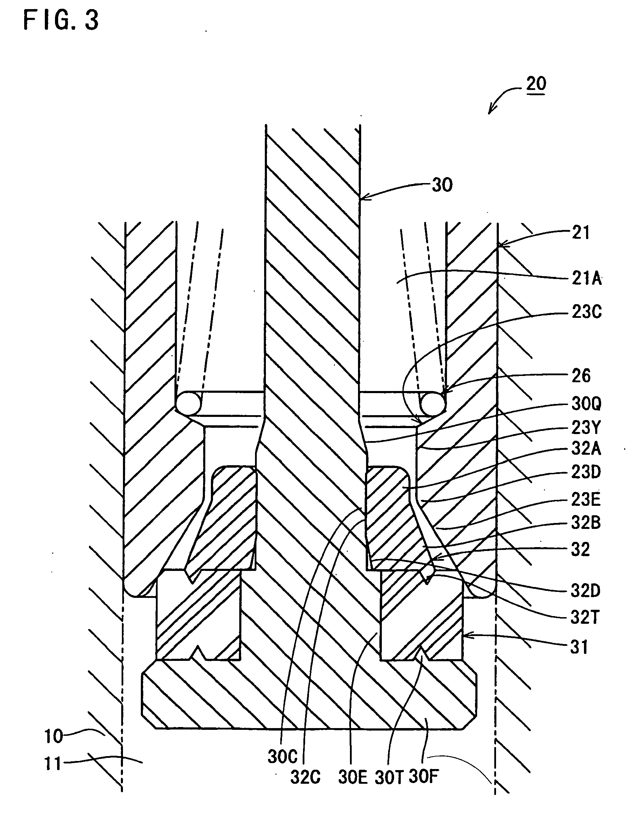

A first embodiment of the present invention will be described with reference to FIGS. 1 to 4. Referring to FIG. 1, reference numeral 10 designates a valve body corresponding to a core retaining member in the invention. The valve body 10 is formed into the shape of a nozzle, for example, and has a core mounting hole 11 formed axially centrally. The valve body 10 has an inner circumferential wall including a middle part formed with a female thread 12. The inner circumferential wall further includes a tapered portion 13 which is located inner than the female thread 12 (below the female thread 12 in FIG. 1) and has a gradually reduced inner diameter.

The core retaining member in the invention should not be limited to the nozzle shape such as of the valve body 10. The core retaining member may be a wall constituting an outer shell formed with the core mounting hole 11, for example.

A valve core 20 comprises a cylindrical core base 21 having an insertion bore 21A formed axially centrally. A movable shaft 30 is inserted through the bore 21A. The core base 21 is tapered from a proximal end toward a distal end (from an upper end toward a lower end as viewed in FIG. 1) as a whole. The proximal end of the core base 21 is provided with a male thread 22A. A positioning flange 23A protrudes laterally from an axially middle of the core base 21. The core base 21 further has a groove 23B formed in a part thereof located nearer to the distal end side than the flange 23A. Another part of the core base 21 located nearer to the distal end than the groove 23B has a uniform outer diameter.

The valve core 20 is inserted into the core mounting hole 11, and the male thread 22A is in threading engagement with the female thread 12. A driving force of the threading engagement causes the positioning flange 23A to abut against the middle tapered portion 13 of the core mounting hole 11, whereupon the flange 23A is positioned, and a cylindrical sealing member 25 attached to the groove 23B is caused to adhere closely to the tapered portion 13 thereby to close an inter-circumferential faces of the core mounting hole 11 and the core base 21.

The core base 21 is divided at a part near to the proximal end thereof into first and second components 22 and 23 which are rotatably coupled to each other. As a result, only the first component 22 of the core base 21 is rotated so that the male thread 22A threadingly engages the female thread 12, whereupon the sealing member 25 and the flange 23A can be pressed against the tapered portion 13 without being rotated. Furthermore, the component 22 has an end face on which a bridging portion 22B is formed so as to stride over the opening of the insertion bore 21A. The bridging portion 22B is formed with a through bore 22C through which the movable shaft 30 is inserted.

A compression coil spring 26 is housed in the core base 21. The spring 26 is made by winding a spring wire material into a conical shape. The movable shaft 30 extends through a central interior of the core base 21. The movable shaft 30 has a spring locking protrusion 30B formed on its portion located near to the proximal end thereof. The spring 26 has a smaller-diameter side end engaged with the protrusion 30B thereby to be locked. On the other hand, the core base 21 has an inwardly opening protruding wall 23C formed on the distal end thereof. The spring 26 has a larger-diameter side end engaged with the wall 23C thereby to be locked. Accordingly, the spring 26 is located between the protrusion 30B and the wall 23C in an expanded state to bias the movable shaft 30 toward the proximal end of the shaft.

The protruding wall 23C has a core base side tapered portion 23E located opposed to the locked portion of the coil spring 26. The tapered portion 23E has an inner diameter which is gradually increased toward the distal end opening of the core base 21. Furthermore, the wall 23C has a cylindrical portion 23Y formed on an axial middle thereof and having a uniform inner diameter. A boundary between the smaller-diameter side end of the tapered portion 23E and the cylindrical portion 23Y is composed of a boundary corner 23D in the invention.

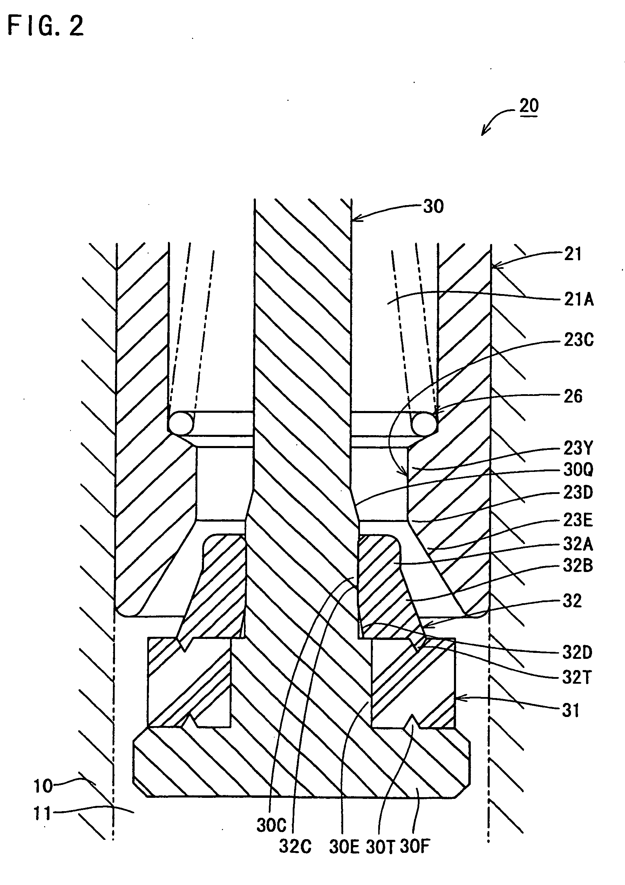

The movable shaft 30 includes a shaft end flange 30F, a rubber ring fitting portion 30E and a metal glass fixing portion 30C formed sequentially on the distal end side thereof as shown in FIG. 2. These portions 30F, 30E and 30C have respective diameters which are stepwise reduced toward the proximal end of the movable shaft 30. A stepped portion is formed between the metal glass fixing portion 30C and the rubber ring fitting portion 30E. A proximal end side of the metal glass fixing portion 30C has a gradually reduced diameter so as to be formed into a tapered shape. A rubber sealing member 31 is fitted into the rubber ring fitting portion 30E, whereas a metal glass sealing member 32 is fitted into the metal glass fixing portion 30C.

The rubber sealing member 31 is formed into an annular shape and has inner and outer circumferential surfaces which are concentric and both end faces are parallel. The rubber sealing member 31 is press fitted into the rubber ring fitting portion 30E.

The metal glass sealing member 32 is formed into a cylindrical shape as a whole and has an entering portion 32A formed on one end of the sealing member 32 at the side away from the rubber sealing member 31. The entering portion 32A has a uniform outer diameter. The metal glass sealing member 32 includes a sealing member side tapered portion 32B having an outer diameter which is gradually increased from a location near to one end of the sealing member 32 to the other end. Furthermore, the metal glass sealing member 32 has a central bore 32C with an inner diameter which is smaller than the outer diameter of the metal glass fixing portion 30C. The central bore 32C has an opening edge at one end side. The opening edge is formed with a fitting guide surface 32D.

A metal glass made into the sealing member 32 is a titanium alloy containing a Va group element including vanadium, niobium and tantalum, a IVa group element including zirconium and hafnium and oxygen or nitrogen. More specifically, for example, the metal glass sealing member 32 is made from metal glass commercially sold under the registered trademark, "Gum Metal" (Registration No. 4458751 owned by Toyota Central R & D Labs., Inc.). The gum metal has an elastic deformability of 2.5 % or above. Since a metal usually composing a metal seal (brass, for example) has an elastic deformability ranging from 0.3 to 0.4 %, the aforesaid gum metal has a sufficiently high elastic deformability.

An elastic deformability is obtained by dividing proof strength of a material by Young's modulus (elastic deformability = (proof strength) / (Young's modulus) where proof strength refers to stress in the case where a predetermined amount of strain (generally 0.2 %, for example) is applied to the test specimen.

A manner of incorporating the metal glass sealing member 32 into the movable shaft 30 will now be described. The movable shaft 30 is inserted into the central bore 32C of the metal glass sealing member 32 while not being formed with the spring locking protrusion 30B or the like. In progress of insertion, the fitting guide surface 32D of the sealing member 32 slides on the tapered surface 30Q of one end of the metal glass fixing portion 30C such that the diameter of the metal glass sealing member 32 is increased. The metal glass sealing member 32 is pushed in until one end face thereof abuts against the stepped surface between the metal glass fixing portion 30C and the rubber ring fitting portion 30E. As a result, the metal glass sealing member 32 is positioned relative to the movable shaft 30 and fitted with the metal glass fixing portion 30C. The aforesaid spring locking protrusion 30B is formed on the movable shaft 30 so as to assume a location near to the proximal end of the movable shaft 30. A head 30A (see FIG. 1) is formed on the proximal end of the movable shaft 30. The metal glass sealing member 32 is thus assembled into the movable shaft 30.

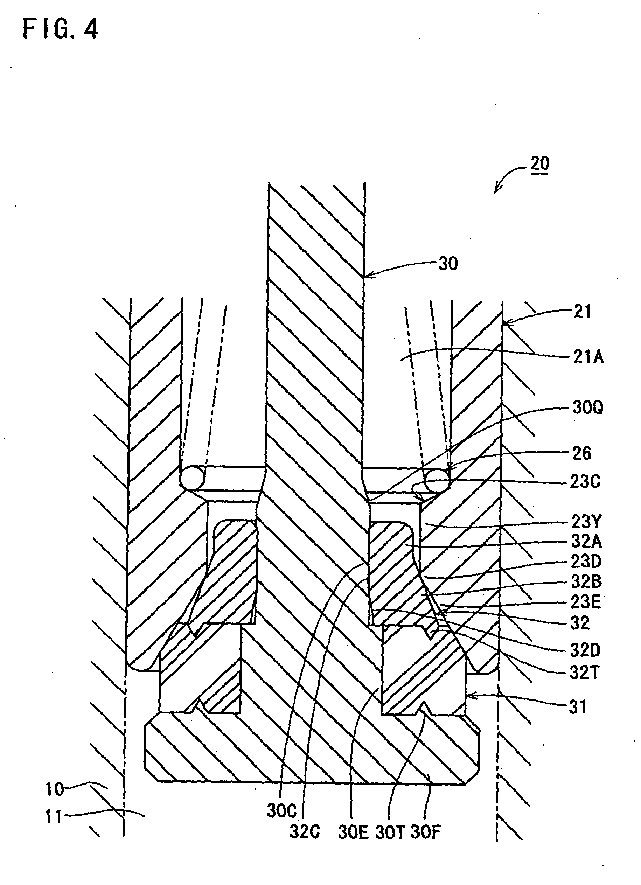

The metal glass sealing member 32 has one end surface which is in abutment with a part from the inner edge toward the outer edge of one end surface of the rubber sealing member 31. As a result, the rubber sealing member 31 is axially held between the metal glass sealing member 32 and the shaft end flange 30F. The opposite surfaces of the shaft end flange 30F and the metal glass sealing member 32 are formed with locking protrusions 30T and 32T respectively. The locking protrusions 30T and 32T bite into the rubber sealing member 31, thereby preventing the movable shaft 30 from falling off. Furthermore, an outer edge corner of the sealing member 31 located at the sealing member 32 side protrudes more laterally than the metal glass sealing member 32. The outer edge corner of the sealing member 31 abuts against the core base side tapered portion 23E as shown in FIG. 4. Furthermore, the sealing member 32 abuts against the boundary corner 23D of the core base side tapered portion 23E, whereby the insertion bore 21A of the core base 21 is closed.

The valve core 20 having the above-described construction will operate as follows. When the valve core 20 is mounted, for example, on a refrigerant charging portion (not shown) in a refrigerant passageway of an air conditioner, the distal end side of the valve core 20 is subjected to refrigerant pressure in the refrigerant passageway. As a result, the valve core 20 is closed by the refrigerant pressure and the biasing force of the compression coil spring 26 as shown in FIG. 4.

When a refrigerant supply pump (not shown) is connected to the valve body 10, the movable shaft 30 is pushed to the distal end side by the pressure of the refrigerant from the pump, whereupon the sealing members 31 and 32 depart from the distal end of the core base 21. Consequently, the insertion bore 21A of the core base 21 is opened so that the refrigerant is charged into the refrigerant passageway.

Once the refrigerant charge is stopped, the movable shaft 30 is moved to the proximal end side by the refrigerant pressure and the biasing force of the spring 26. Then, the rubber sealing member 31 firstly abuts against the core base side tapered portion 23E of the core base 21. An amount of deformation of the sealing member 31 is increased as the sealing member 31 is pushed to the smaller-diameter side of the tapered portion 23E deeper, whereupon the sealing member 31 adheres closely to the tapered portion 23E. As a result, a rubber seal is provided between the distal end of the movable shaft 30 and the open distal end of the core base 21 by the rubber sealing member 31.

When the rubber seal is once provided, the boundary corner 23D of the core base 21 abuts against the tapered portion 32B of the metal glass sealing member 32. Since the sealing member 32 made from metal glass is easy to deform, the refrigerant pressure and the spring force of the spring 26 can cause the boundary corner 23D and the tapered portion 32B to adhere closely to each other. The boundary corner 23D can be caused to bite into the tapered portion 32B of the metal glass sealing member 32 depending upon a degree of the gas pressure. Consequently, a metal glass seal is provided between the distal end of the movable shaft 30 and the open distal end of the core base 21 by the metal glass sealing member 32.

As obvious from the foregoing, in the valve core 20 of the embodiment, the rubber and metal glass sealing members 31 and 32 provide a double seal structure which can tightly close the insertion bore 21A and the core mounting hole 11 of the valve body 10. Additionally, the metal glass constituting the metal glass sealing member 32 has an exceedingly higher elasticity than ordinary metalic materials constituting a metal seal. Accordingly, the metal glass sealing member 32 can be caused to adhere closely to a counterpart to provide a seal by application of a smaller force than the metal seal. Moreover, since the metal glass is amorphous like oxide glass, gas is difficult to permeate the metal glass. Consequently, the above-described valve core can reduce an amount of gas leak as compared with conventional valve cores having only the rubber seal or conventional valve cores provided with the combination of the rubber and metal seals. Additionally, since the metal glass sealing member 32 also serves to retain the rubber sealing member 31, the number of components can be reduced. Furthermore, since the locking protrusions 30T and 32T formed on the shaft end flange 30F and the metal glass sealing member 32 bite into the rubber sealing member 31, the rubber sealing member 31 can be prevented from being detached from the movable shaft 30 in opening the valve core 20 even when high pressure causes the rubber sealing member 31 to adhere closely to the core base side tapered portion 23E. Consequently, the rubber sealing member 31 can be removed from the counterpart.

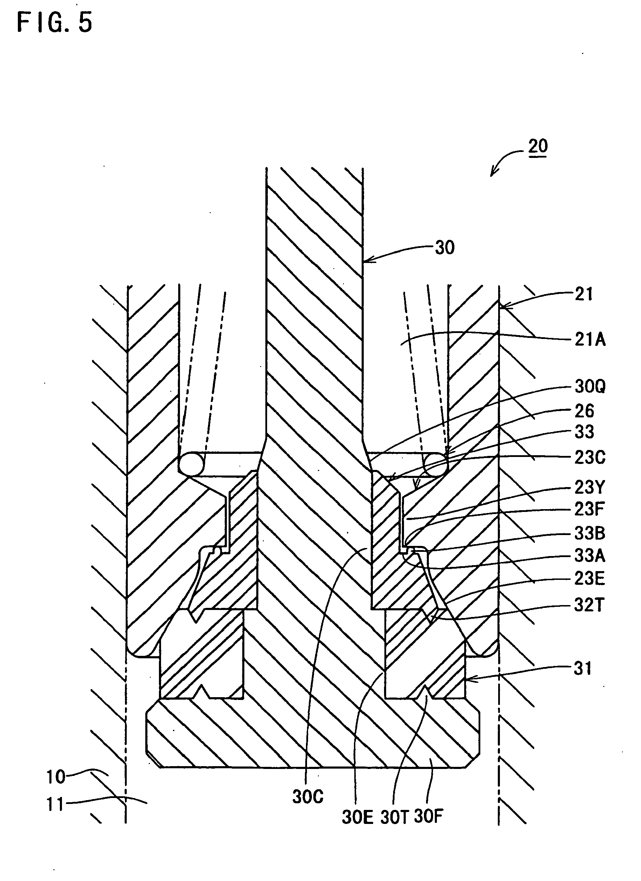

FIG. 5 illustrates a second embodiment of the invention. The valve core 20 of the second embodiment differs from the first embodiment only in the structure of abutment of the metal glass sealing member 32 against the core base 21. Identical or similar parts in the second embodiment are labeled by the same reference symbols as those in the first embodiment. The description of these identical or similar parts will be eliminated and only the difference will be described.

A metal glass sealing member 33 includes a first flat surface 33A formed in an axial middle thereof so as to be directed to the proximal end of the movable shaft 30. An annular protrusion 33B extends from the first flat surface 33A. Both first flat surface 33A and annular protrusion 33B are continuously formed over a whole circumference of the sealing member 33.

On the other hand, a stepped portion is provided between the core base side tapered portion 23E and the cylindrical portion 23Y in the opening protruding wall 23C of the core base 21. A second flat surface 23F directed to the open distal end of the core base 21 is formed in the opening protruding wall 23C. The second flat surface 23F is continuously formed over a whole inner circumference of the core base 21 and opposed to the flat surface 33A axially with respect to the core base 21.

According to the construction of the second embodiment, the annular protrusion 33B of the metal glass sealing member 33 abuts against the second flat surface 23F upon closure of the valve core 20, so that the distal end of the annular protrusion 33B is slightly collapsed and adheres closely to the second flat surface 23F. Consequently, a metal glass seal is provided between the distal end of the movable shaft 30 and the open distal end of the core base 21 by the metal glass sealing member 33.

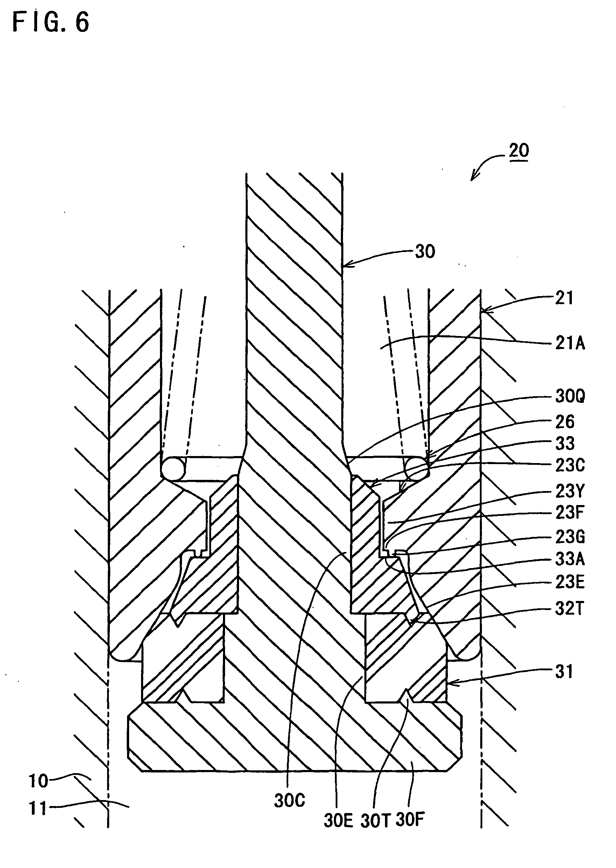

FIG. 6 illustrates a third embodiment of the invention. An annular protrusion 23G extends from the second flat surface 23F of the core base 21, instead of the annular protrusion 33B of the metal glass sealing member 33 as shown in FIG. 6. The construction of third embodiment can achieve the same effect as in the second embodiment.

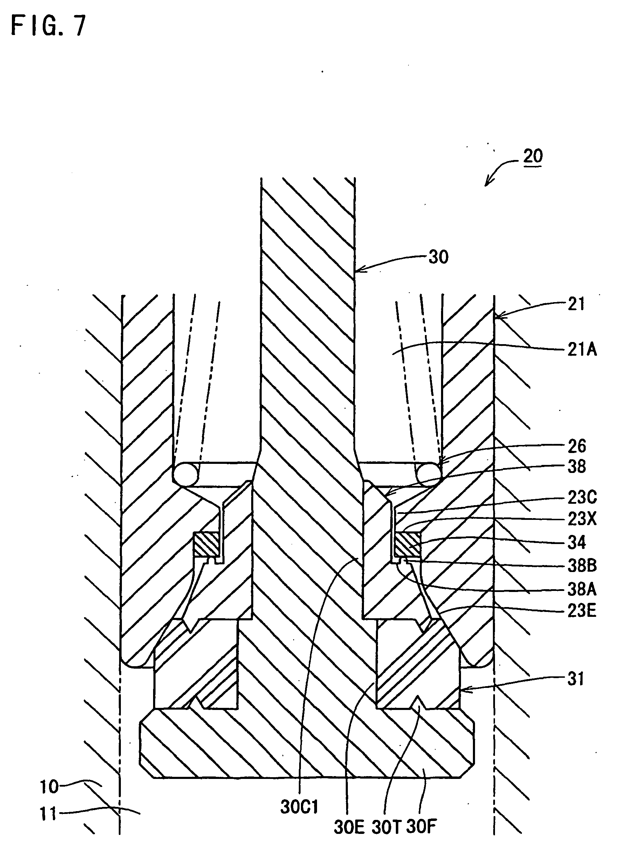

FIG. 7 illustrates a fourth embodiment of the invention. A cylindrical member 38 is fitted with a cylindrical member fixing portion 30C1 of the movable shaft 30 as shown in FIG. 7. The cylindrical member 38 has the same shape as the metal glass sealing member 33 in the second embodiment and is made from an ordinary metal which differs from the metal glass, for example, stainless steel. The rubber sealing member 31 is held between the cylindrical member 38 and the shaft end flange 30F. The cylindrical member 38 includes a flat surface 38A (serving as a second flat surface in the invention) directed to the proximal end side of the movable shaft 30. On the flat surface 38A is formed an annular protrusion 38B. Furthermore, a flat surface 23X directed to the distal end side of the core base 21 is formed on the protruding wall 23C of the core base 21, and an annular metal glass sealing member 34 is mounted so as to overlap the flat surface 23X. In the construction of the fourth embodiment, when the valve core 20 is closed, the annular protrusion 38B extending from the flat surface 38A of the cylindrical member 38 bites into the metal glass sealing member 34, whereupon a metal glass seal is provided by the metal glass sealing member 34.

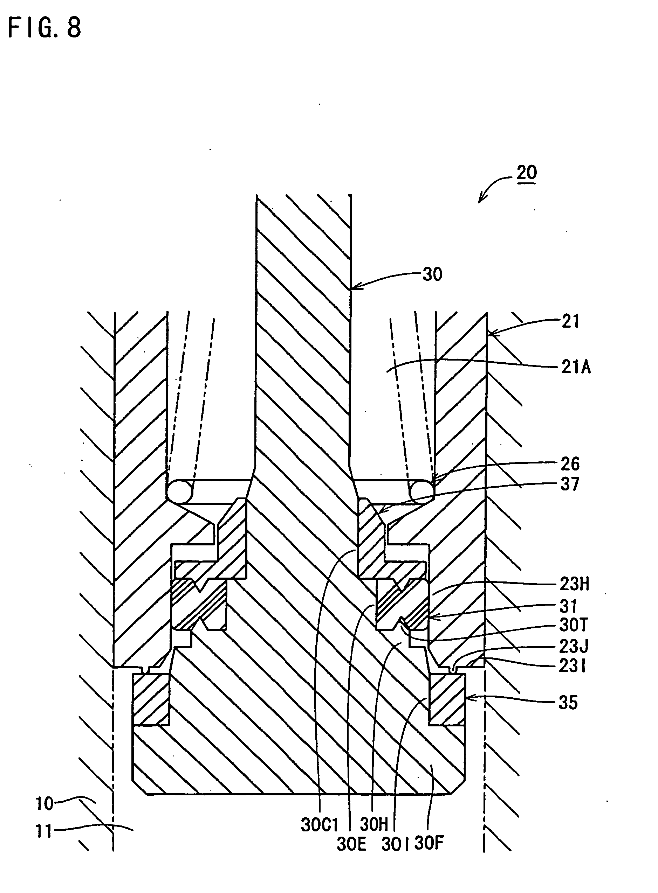

FIG. 8 illustrates a fifth embodiment of the invention. On the movable shaft 30 of the valve core 20 are provided the shaft end flange 30F, a metal glass fixing portion 30I, a rubber seal support 30H, the rubber ring fitting portion 30E and the cylindrical member fixing portion 30C1 sequentially in this order from the distal end thereof. A cylindrical member 37 made from an ordinary metal is fitted with the fixing portion 30C1. A rubber sealing member 31 is held between the rubber seal support 30H and the cylindrical member 37. When the valve core 20 is closed, the outer edge of the sealing member 31 adheres closely to a cylindrical inner surface 23H of the core base 21. Furthermore, an annular metal glass sealing member 35 is fitted with the metal glass fixing portion 30I. One end surface of the metal glass sealing member 35 abuts against the shaft end flange 30F. The other end surface of the sealing member 35 is axially opposed to a distal end surface 23I of the core base 21. Additionally, an annular protrusion 23J protrudes from the distal end surface 23I of the core base 21. Consequently, a metal glass seal can be provided by the metal glass sealing member 35.

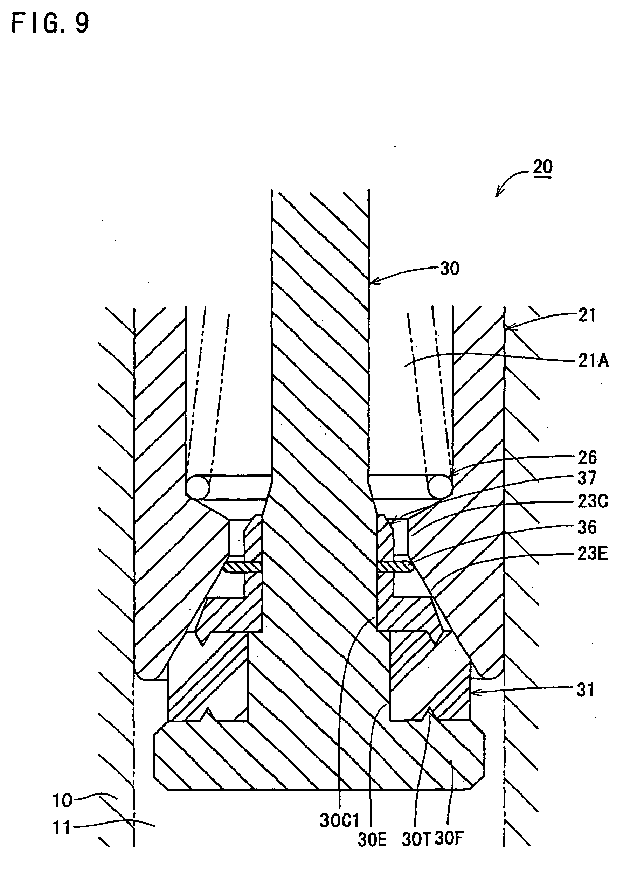

FIG. 9 illustrates a sixth embodiment of the invention. The sixth embodiment is a modified form of the fourth embodiment. The cylindrical member 37 made of stainless steel is fitted with the fixing portion 30C1. A metal glass sealing member 36 formed into the shape of a circular disc is assembled onto the cylindrical member 37. The metal glass sealing member 36 protrudes laterally from the cylindrical member 37. When the valve core 20 is closed, the outer edge of the sealing member 36 abuts against the tapered portion 23E of the core base 21. In this state, the whole sealing member 36 is flexed toward the distal end side of the movable shaft 30. As a result, the whole circumferential edge of the sealing member 36 adheres closely to the tapered portion 23E, whereby the metal glass seal is provided.

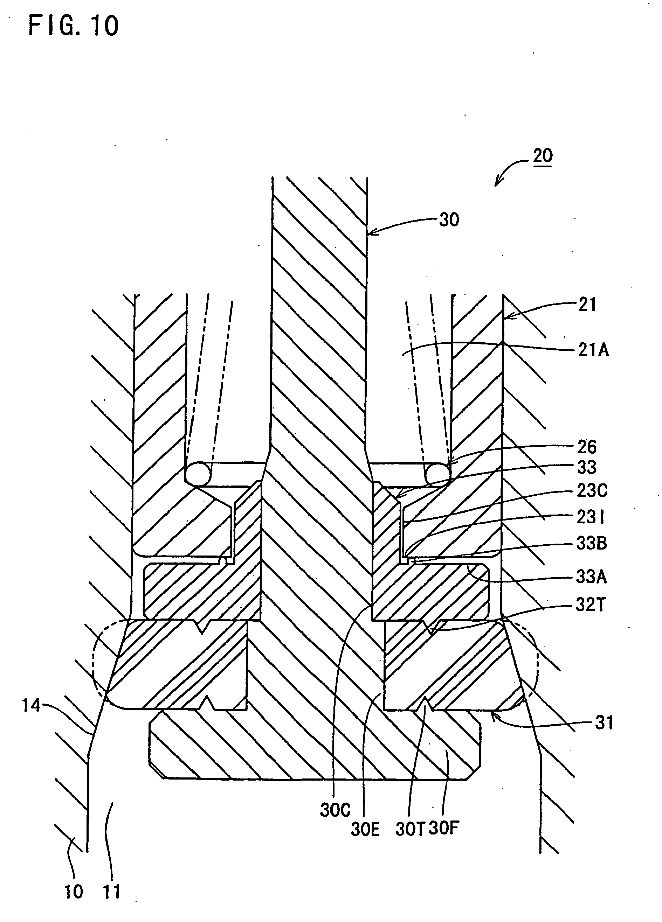

FIG. 10 illustrates a seventh embodiment of the invention. The seventh embodiment is a modified form of the second embodiment. The first flat surface 33A of the metal glass sealing member 33 is adapted to be opposed to the distal end face 23I of the core base 21. Consequently, the annular protrusion 33B extending from the first flat surface 33A adheres closely to the distal end face 23I, whereby a metal glass seal is provided.

The rubber sealing member 31 has a rounded outer circumferential surface in the seventh embodiment. Furthermore, the core mounting hole 11 of the valve body 10 is formed with a tapered portion 14 with a diameter gradually reduced toward the proximal end of the valve core 20. When the valve core 20 is closed, the rubber sealing member 31 adheres closely to the tapered portion 14, thereby providing a rubber seal.

An experiment was conducted using the valve core 20 of the first embodiment. Two valve cores 20 described in the first embodiment were produced as product 1. Furthermore, two other valve cores 20 from each of which the metal glass sealing member 32 was eliminated were produced as comparative product 1.

A core mounting hole was formed in a wall of a closed container. Each product 1 was inserted into the core mounting hole thereby to be mounted therein. A predetermined amount of gas is charged through the valve core of product 1 into the container. Two containers (product containers) on which products 1 were mounted respectively were prepared. Two other containers (comparative product containers) onto which comparative products 1 were assembled, instead of the products 1, were prepared.

The aforesaid four containers were accommodated in a thermally insulating chamber. An atmospheric temperature in the chamber was set at a predetermined value so that the pressure in each container was kept at 1 MPa for a week. An amount of gas leaking from each container was measured in this period. In the similar manner, the pressure in each container was kept at 6.4 MPa, 10 MPa and 15 MPa for a week. An amount of gas leaking from each container was also measured in this period. Mean values of gas leak amounts were obtained regarding the two products 1 and the two comparative products 1 respectively. TABLE 1 shows obtained mean values.

**TABLE 1**

| Pressure (MPa) | | 1 | 6.4 | 10 | 15 |
|---|---|---|---|---|---|
| Amount of gas leak (g/week) | Comparative product 1 | 0.009 | 0.036 | 0.087 | 0.210 |
| | Product 1 | 0.003 | 0.025 | 0.018 | 0.007 |

As obvious from the results of TABLE 1, product 1 could reduce an amount of gas leak more than comparative product 1. Furthermore, when gas pressure was at 15 MPa, a gas leak amount in product 1 could be limited to one thirtieth of a gas leak amount of comparative product 1.

The invention should not be limited to the foregoing embodiments. The embodiments can be modified as will be described in the following. These modifications are within the technical scope of the invention. Furthermore, the invention can be practiced in forms other than those described below without departing from the scope of the invention as defined by the appended claims.

The metal glass constituting the sealing member 32 is the titanium alloy in each foregoing embodiment. However, the sealing member 32 may be a magnesium alloy, a zirconium alloy, a lanthanum alloy or the like, instead.

The valve core 20 in each foregoing embodiment comprises the core base 21 and the compression coil spring 26 housed in the core base 21. However, the compression coil spring inserted through the movable shaft 30 may be provided between the bridging portion 22B and the head 30A of the movable shaft 30 in an expanded state, instead.

The valve core 20 is provided for charging the refrigerant of the air conditioner in each foregoing embodiment. However, the valve core 20 may be used in tire valves, instead.

## Claims

1. A valve core to be mounted in a core mounting hole (11) defined in a core retaining member (10) to open and close the core mounting hole (11), the core mounting hole (11) having an inner peripheral surface, the valve core comprising:
a cylindrical core base (21) to be fixed in the core mounting hole (11) and having a distal end;
a movable shaft (30) extending through the core base (21) so as to be movable, the movable shaft (30) having a distal end;
a first sealing member (31) made of rubber and provided on the distal end of the movable shaft (30) so as to adhere closely to the distal end of the core base (21) or the inner circumferential surface of the core mounting hole (11), thereby closing the core mounting hole (11), **characterized by**:
a second sealing member (32 to 36) made of a metal glass and provided on the distal end of either one of the movable shaft (30) and the core base (21) so as to adhere closely to the distal end of the other, thereby closing the core mounting hole (11).

2. The valve core according to claim 1, **characterized in that** the second sealing member (32 to 36) is made of a titanium alloy containing a Va group element including vanadium, niobium and tantalum and a IVa group element including zirconium and hafnium.

3. The valve core according to claim 1 or 2, further **characterized by** a metal glass fixing portion (30C) formed on the movable shaft (30) to which the second sealing member (32, 33) is fitted and a shaft end flange (30F) formed on the movable shaft (30) so as to sandwich the first sealing member (31) in cooperation with the second sealing member (32, 33) therebetween.

4. The valve core according to claim 3, further **characterized by** locking protrusions (30T, 32T) which are formed on the shaft end flange (30F) and the second sealing member (32, 33) so as to bite into the first sealing member (31), thereby limiting deformation of the first sealing member (31).

5. The valve core according to claim 3 or 4, further **characterized by** a core base side tapered portion (23E) formed on the distal end of the core base (21) so as to spread toward a distal end opening of the core base (21), the first sealing member (31) being capable of adhering closely to the core base side tapered portion (23E), and a sealing member side tapered portion (32B) formed on the second sealing member (32, 33) and having a diameter reduced toward an inner interior of the core base (21), the sealing member side tapered portion (32B) being capable of abutting against a boundary corner (23D) at a smaller diameter side of the core base side tapered portion (23E).

6. The valve core according to any one of claims 1 to 5, further **characterized by** a first flat surface (33A) which is formed on the second sealing member (33) so as to be directed axially to the movable shaft(30), a second flat surface (23F) formed on the distal end of the movable shaft (30) or of the core base (21) so as to be opposed to the first flat surface (33A) axially relative to the movable shaft, and an annular protrusion (23G, 33B) protruding from either one of the first and second flat surfaces (33A, 23F) so as to be capable of adhering to the other of the first and second flat surfaces (33A, 23F).

7. Valve core assembly, comprising a core retaining member (10) defining a core mounting hole (11) and a valve core according to any one of the preceding claims.

## Patentansprüche

1. Ventileinsatz zum Aufnehmen in einer Einsatzaufnahmeöffnung (11), die in einem Einsatzhalterungsbauteil (10) definiert ist, zum Öffnen und Schließen der Einsatzaufnahmeöffnung (11), wobei die Einsatzaufnahmeöffnung (11) eine Innenumfangsfläche aufweist, und wobei der Ventileinsatz enthält:
eine zylindrische Einsatzbasis (21), die in der Einsatzaufnahmeöffnung (11) zu fixieren ist und ein Distalende aufweist;
einen beweglichen Schaft (30), der sich so durch die Einsatzbasis (21) erstreckt, dass er beweglich ist, und der ein Distalende aufweist;
ein erstes Dichtungsbauteil (31), das aus Gummi ist und so an dem Distalende des beweglichen Schafts (30) vorgesehen ist, dass es eng an dem Distalende der Einsatzbasis (21) oder der Innenumfangsfläche der Einsatzaufnahmeöffnung (11) anliegt, und dabei die Einsatzaufnahmeöffnung (11) schließt, **gekennzeichnet durch**:
ein zweites Dichtungsbauteil (32 bis 36), das aus einem Metallglas hergestellt ist und auf dem Distalende von einem von beiden, dem beweglichen Schaft (30) und der Einsatzbasis (21), so vorgesehen ist, dass es nahe am Distalende des anderen anliegt, wobei es die Einsatzaufnahmeöffnung (11) schließt.

2. Ventileinsatz nach Anspruch 1, **dadurch gekennzeichnet, dass** das zweite Dichtungsbauteil (32 bis 36) aus einer Titanlegierung hergestellt ist, die ein Element der 5. Gruppe, zu der Vanadium, Niob und Tantal gehören, und ein Element der 4. Gruppe, zu der Zirkonium und Hafnium gehören, enthält.

3. Ventileinsatz nach Anspruch 1 oder 2, weiter **gekennzeichnet durch** einen Metallglasfixierungsbereich (30C), der auf dem beweglichen Schaft (30) ausgebildet ist, an dem das zweite Dichtungsbauteil (32, 33) angebracht ist, und einen Schaftendflansch (30F), der so auf dem beweglichen Schaft (30) ausgebildet ist, dass er das erste Dichtungsbauteil (31) in Zusammenarbeit mit dem zweiten Dichtungsbauteil (32, 33) dazwischen einschließt.

4. Ventileinsatz nach Anspruch 3, weiter **gekennzeichnet durch** Sperrvorsprünge (30T 32T), die so auf dem Schaftendflansch (30F) und dem zweiten Dichtungsbauteil (32, 33) ausgebildet sind, dass sie sich in das erste Dichtungsbauteil (31) fressen, wodurch die Verformung des ersten Dichtungsbauteils (31) eingeschränkt wird.

5. Ventileinsatz nach Anspruch 3 oder 4, weiter **gekennzeichnet durch** einen einsatzbasisseitigen kegelförmigen Bereich (23E), der so an dem Distalende der Einsatzbasis (21) ausgebildet ist, dass er sich zu einer Distalendenöffnung der Einsatzbasis (21) aufweitet, wobei das erste Dichtungsbauteil (31) in der Lage ist, nahe and dem einsatzbasisseitigen kegelförmigen Bereich (23E) anzuliegen, und einen dichtungsbauteilseitigen kegelförmigen Bereich (32B), der auf dem zweiten Dichtungsbauteil (32, 33) ausgebildet ist, und dessen Durchmesser zu einer inneren Innenseite der Einsatzbasis (21) hin abnimmt, wobei der dichtungsbauteilseitige kegelförmige Bereich (32B) in der Lage ist, an einer Begrenzungsecke (23D) an einer Seite kleineren Durchmessers des einsatzbasisseitigen kegelförmigen Bereichs (23E) anzuliegen.

6. Ventileinsatz nach einem der Ansprüche 1 bis 5, weiter **gekennzeichnet durch** eine erste flache Oberfläche (33A), die so auf dem zweiten Dichtungsbauteil (33) ausgebildet ist, dass sie axial zu dem beweglichen Schaft (30) gerichtet ist, eine zweite flache Oberfläche (23F), die so auf dem Distalende des beweglichen Schafts (30) oder der Einsatzbasis (21) ausgebildet ist, dass sie der ersten flachen Oberfläche (33A) axial relativ zu dem beweglichen Schaft gegenüberliegt, und einen ringförmigen Vorsprung (23G, 33B), der von einer von beiden, der ersten und der zweiten flachen Oberfläche (33A, 23F), so hervorsteht, dass er in der Lage ist, an der jeweils anderen aus der ersten und zweiten flachen Oberfläche (33A, 23F) anzuliegen.

7. Ventileinsatzbaugruppe, enthaltend ein Einsatzhalterungsbauteil (10), das eine Einsatzaufnahmeöffnung (11) definiert, und einen Ventileinsatz nach einem der vorhergehenden Ansprüche.

## Revendications

1. Clapet à monter dans un trou de montage de clapet (11) défini dans un élément de retenue de clapet (10) pour l'ouverture et la fermeture du trou de montage de clapet (11), le trou de montage de clapet (11) possédant une surface périphérique intérieure, le clapet comprenant:
une base de clapet cylindrique (21) à fixer dans le trou de montage de clapet (11) et possédant une extrémité distale;
un arbre mobile (30) traversant la base du clapet (21) de manière à être mobile, l'arbre mobile (30) possédant une extrémité distale;
un premier élément d'étanchéité (31) constitué de caoutchouc et disposé sur l'extrémité distale de l'arbre mobile (30) de manière à adhérer étroitement à l'extrémité distale de la base du clapet (21) ou à la surface circonférentielle intérieure du trou de montage de clapet (11), fermant ainsi le trou de montage de clapet (11), **caractérisé par**:
un deuxième élément d'étanchéité (32 à 36) constitué d'une combinaison métal-verre et disposé sur l'extrémité distale, soit de l'arbre mobile (31), soit de la base du clapet (21) afin d'adhérer étroitement à l'extrémité distale de l'autre, fermant ainsi le trou de montage de clapet (11).

2. Clapet selon la revendication 1, **caractérisé en ce que** le deuxième élément d'étanchéité (32 à 36) est constitué d'un alliage de titane contenant un élément du groupe Va, comprenant le vanadium, le niobium et le tantale et un élément du groupe IVa comprenant le zirconium et le hafnium.

3. Clapet selon la revendication 1 ou 2, également **caractérisé par** une portion de fixation dans une combinaison métal-verre (30C) formée sur l'arbre mobile (30) sur lequel le deuxième élément d'étanchéité (32, 33) est monté et une bride d'extrémité d'arbre (30F) formée sur l'arbre mobile (30) de manière à prendre en sandwich le premier élément d'étanchéité (31) en coopération avec le deuxième élément d'étanchéité (32, 33) intermédiaire.

4. Clapet selon la revendication 3, également **caractérisé par** des protrusions de fermeture (30T, 32T) qui sont formées sur la bride d'extrémité d'arbre (30F) et le deuxième élément d'étanchéité (32, 33) de manière à mordre dans le premier élément d'étanchéité (31), limitant ainsi la déformation du premier élément d'étanchéité (31).

5. Clapet selon la revendication 3 ou 4, également **caractérisé par** une portion en pointe du côté de la base du clapet (23E), formée sur l'extrémité distale de la base du clapet (21) de manière à s'étendre vers une ouverture d'extrémité distale de la base du clapet (21), le premier élément d'étanchéité (31) étant en mesure d'adhérer étroitement à la portion en pointe du côté de la base du clapet (23E), et une portion en pointe du côté de l'élément d'étanchéité (32B), formée sur le deuxième élément d'étanchéité (32,33) et ayant un diamètre réduit en direction d'un diamètre intérieur de la base du clapet (21), la portion en pointe du côté de l'élément d'étanchéité (32B) pouvant être contigu d'un angle limite (23D) sur un côté de diamètre plus étroit de la portion en pointe du côté de la base du clapet (23E).

6. Clapet selon l'une des revendications 1 à 5, également **caractérisé par** une première surface plate (33A) qui est formée sur le deuxième élément d'étanchéité (33), de manière à être dirigé axialement vers l'arbre mobile (30), une deuxième surface plate (23F) formée sur l'extrémité distale de l'arbre mobile (30) ou de la base du clapet (21), de manière à être opposée à la première surface plate (33A) relative axialement par rapport à l'arbre mobile et une protrusion annulaire (23G, 33B) dépassant de l'une ou l'autre des premières et deuxièmes surfaces plates (33A, 23F) de manière à pouvoir adhérer à l'autre des premières et deuxièmes surfaces plates (33A,; 23F).

7. Clapet monté, comprenant un élément de retenue de clapet (10) définissant un trou de montage de clapet (11) et un clapet selon l'une quelconque des revendications qui précèdent.
